Europäisches Patentamt

(19) European Patent Office

Office européen des brevets

(11) Publication number: **0 168 934**
A1

## (12) EUROPEAN PATENT APPLICATION

(21) Application number: 85303950.1

(22) Date of filing: 04.06.85

(51) Int. Cl.⁴: **B 23 K 9/28,** H 01 R 4/50

(30) Priority: 15.06.84 US 620855

(71) Applicant: TWECO PRODUCTS, INC, 4200 W. Harry, Wichita Kansas 67277 (US)

(43) Date of publication of application: 22.01.86 Bulletin 86/4

(72) Inventor: Cucick, Joseph B., III, 12083 Estate Lane, R.R. No. 1, Peck Kansas 67120 (US)

(84) Designated Contracting States: DE FR GB IT

(74) Representative: Pears, David Ashley et al, REDDIE & GROSE 16 Theobalds Road, London WC1X 8PL (GB)

(54) Welding gun.

(57) A welding gun (10) has a handle (12) housing a connector assembly (14) for a composition cable (44) including a core tube (46) for guiding welding wire, a surrounding passage for shielding gas and electrical cable strands (16) (between inner and outer insulating sheaths) for conducting welding current to a welding tip of the gun via a connector body (30) of the connector assembly (14). In order to avoid abrasion of the cable strands, they are clamped against a tapered surface of the connector body (30) by a sleeve (22) which is advanced axially (without rotation) by a compression nut (20) screwed onto the connector body (30).

EP 0 168 934 A1

# WELDING GUN

This invention relates to a welding gun of the kind set forth in the introductory part of claim 1.

One such gun is known from US 4 297 561. The cable strands are part of a composite cable with a core tube (of coiled wire) for guiding welding wire to the welding tip, an annular space for shielding gas between the core tube and a stout insulating sheath, a braided electrical conductor and an outer insulating sheath. The strands of the braided electrical conductor are clamped between an external tapered surface of the connector body and an internal tapered surface of the compression unit. The gun is very simple but, when the compression nut is tightened, the rotation thereof tends to twist and break off many of the strands. This results in poor electrical contact and an inadequate mechanical connection between the cable strands and the power cable connector body. Additionally, the abraded wire causes difficulty in reassembly and requires frequent "cutting back".

In US 3 629 547 the end of the cable, stripped of the outer insulating sheath is clamped in a separate connector block by means of a pressure insert therein and set-screws. The whole structure of the gun is rendered much more complex.

The object of the present invention is to avoid the problem of strand breakage while retaining a simple construction. To this end the invention is characterised as in the characterising part of claim 1.

By introducing the connector sleeve as a separate component from the compression nut, although the nut advances rotationally along the connector body, the connector sleeve is moved axially along that connector body by the advancing nut. The cable strands are clamped between the connector sleeve and the abutment portion, which may be a tapered mandrel extending outwardly from the connector body, in an axial rather than in a rotational manner. Structural integrity of the wire is therefore maintained.

The invention will be described in more detail by way of example and with reference to the accompanying drawings in which:

Fig 1 is a side view of a gun embodying the invention.

Fig 2 is a side view of a power connector assembly of the gun.

Fig 3 is a view of the power connector assembly taken along line 3-3 in Fig 2.

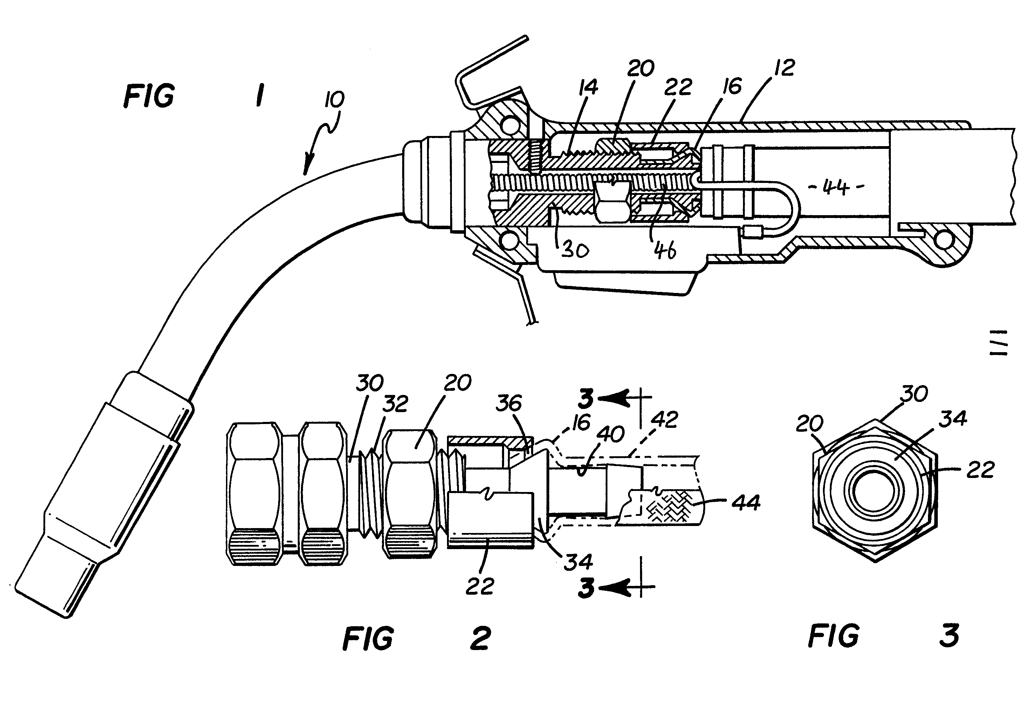

Figure 1 illustrates a power connector assembly 14 positioned in handle 12 of a welding gun 10.

As seen in Figure 2, a compression nut 20 is screwed on to threads 32 on a power cable connector body 30. A connector sleeve 22 is axially movable along the generally elongated power cable connector body 30 and is positioned between the nut 20 and tapered mandrel 34. As the nut 20 is rotationally advanced towards the connector sleeve 22, the connector sleeve 22 is axially advanced towards the tapered mandrel 34. Electrical conductor strands 16 may be clamped between the connector sleeve 22 and the outermost portion of the tapered mandrel 34 in an axial rather than in a rotational manner, thus reducing the likelihood of abrasion of the conductor wire.

A beveled internal rim 36 on the inner surface of the connector sleeve 22 is angularly adapted to mate with the tapered mandrel 34 so that continued electrical contact and a strong mechanical connection are ensured between the electrical conductor strands 16 and the connector body 30. The electrical conductor strands 16 may include a plurality of braided strands and be arranged within an inner insulative sheath 40, and an outer insulative sheath 42, so as to form a cable assembly 44. The core tube 46 for the welding wire can be seen in Fig 1.

- 3 -

CLAIMS

1. A welding gun comprising a welding tip electrically connected to a connector body (30) for the supply of welding current to the welding tip, and a compression nut (20) for clamping strands (16) of an electrical cable to the connector body, characterised in that the compression nut (20) acts against a sleeve (22) so as to urge the sleeve axially, without rotation of the sleeve, and the strands (16) of the cable are clamped between the sleeve and an abutment portion (34) of the connector body (30).

2. A welding gun according to claim 1, characterised in that the abutment portion (34) is a tapered mandrel on the connector body (30) and to which the sleeve (22) advances when the nut (20) is tightened.

3. A welding gun according to claim 2, characterised in that the sleeve (22) has an internal rim (36) and the cable strands (16) are clamped between this rim and the mandrel (34).

4. A welding gun according to claim 3, characterised in that the internal rim (36) is beveled to match the taper of the mandrel (34).

5. A welding gun according to any of claims 1 to 4, characterised in that the connector body (30) is housed within a handle (12) of the gun.

6. In a welding gun apparatus having a handle and a means for communicating electrical power to a welding tip, an improved electrical power conductor assembly, the improvement comprising a means for securing electrical conductor wire to said assembly so that the structural integrity of said conductor wire is maintained.

FIG 1

10

14   20   22   16   12

-44-

30   46

I/I

FIG 2

30   20
32      36   3
16  40  42
44
22   34   3

FIG 3

20   30   34
22

0168934

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4 270 824  (M.W. ERICKSON) * column 5, line 1 - column 6, line 36; figures 6-8 * | 1-4 | B 23 K    9/28 H 01 R    4/50 |
| A |  | 5,6 |  |
|  | --- |  |  |
| Y | DE-C- 398 648  (ALLGEMEINE ELEKTRICITÄTS-GES.) * complete document * | 1,2 |  |
|  | --- |  |  |
| Y | DE-C-1 242 731  (SIEMENS AG) * complete document * | 1,3,4 |  |
|  | --- |  |  |
| D,A | US-A-4 297 561  (R.L. TOWNSEND et al.) * figure 2 * | 1,5,6 | TECHNICAL FIELDS SEARCHED (Int. Cl.4) |
|  | --- |  |  |
| D,A | US-A-3 629 547  (J.R. KESTER et al.) * figures 3-5 * | 1,5,6 | B 23 K    9/00 H 01 R    4/00 |
|  | ----- |  |  |

The present search report has been drawn up for all claims

| Place of search | Date of completion of the search | Examiner |
|---|---|---|
| BERLIN | 06-09-1985 | WUNDERLICH J E |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO Form 1503 03 82